(19) **Europäisches Patentamt / European Patent Office / Office européen des brevets**

(11) **EP 4 150 598 B1**

(12) **EUROPEAN PATENT SPECIFICATION**

(45) Date of publication and mention
of the grant of the patent:
**29.01.2025 Bulletin 2025/05**

(21) Application number: **21748966.5**

(22) Date of filing: **12.07.2021**

(51) International Patent Classification (IPC):
**G08B 13/196** *(2006.01)*    **G08B 13/181** *(2006.01)*
**G08B 13/19** *(2006.01)*    **G01S 13/02** *(2006.01)*

(52) Cooperative Patent Classification (CPC):
**G08B 13/19695; G01S 13/34; G01S 13/86;
G08B 13/181; G08B 29/183;** G08B 13/19

(86) International application number:
**PCT/IL2021/050852**

(87) International publication number:
**WO 2022/013863 (20.01.2022 Gazette 2022/03)**

(54) **DETECTING AN OBJECT IN AN ENVIRONMENT**

ERKENNUNG EINES OBJEKTS IN EINER UMGEBUNG

DÉTECTION D'UN OBJET DANS UN ENVIRONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2020   IL 27600120**

(43) Date of publication of application:
**22.03.2023   Bulletin 2023/12**

(73) Proprietor: **Essence Security International (E.S.I.)
Ltd.**
**4672530 Herzlia Pituach (IL)**

(72) Inventors:
• **AMIR, Ohad**
**4642300 Herzlia (IL)**

• **MORAV, Gregory**
**4329809 RaAnana (IL)**
• **ROSENBLUM, Ran**
**4971005 Petach Tikva (IL)**
• **SCHNAPP, Jonathan Mark**
**6451234 Tel Aviv (IL)**

(74) Representative: **Marks & Clerk LLP**
**15 Fetter Lane**
**London EC4A 1BW (GB)**

(56) References cited:
**EP-B1- 2 911 125       WO-A1-2010/052661
US-A1- 2012 327 242    US-A1- 2019 188 492
US-B1- 10 657 784**

## Description

### BACKGROUND

Motion sensors are designed to monitor a defined area, which may be outdoors (e.g., entrance to a building, a yard, and the like), and/or indoors (e.g., within a room, in proximity of a door or window, and the like). Motion sensors may be used for security purposes, to detect intruders based on motion in areas in which no motion is expected, for example, an entrance to a home at night.

Some security systems employ a motion sensor in the form of a passive infrared (PIR) detector to sense the presence of a heat-radiating body (i.e., such a heat-radiating body would typically indicate the presence of an unauthorized person) in its field of view, and then issue a deterrent such as an audible alarm sound.

Some security systems employ a camera in addition to a motion sensor. It is known to trigger the capture of an image by a camera based on a motion sensor detecting motion.

Background art can be found in EP2353293, EP3203454, and US20140300735A1.

US10657784 describes controlling a camera to capture video based on one or more auxiliary motion sensors. First data indicative of motion may be received from a first motion sensor at a camera. In some examples, the first motion sensor may have a first field-of-view. Second data indicative of motion may be received from a second motion sensor at the camera device. In some examples, the second motion sensor may have a second field-of-view different than the first field-of-view. A determination may be made that the first data temporally corresponds to the second data. In some examples, an image sensor of the camera may capture first image data in response to the first data indicative of motion and the second data indicative of motion.

US2019/188492 discloses a presence detection device for detecting a presence of an object in its environment is provided, which comprises a movement detection unit for detecting an initial movement of the object in the environment of the presence detection device and for outputting a movement signal depending on the detection as well as a control unit for generating an activation signal depending on the movement signal. Moreover, the presence detection device comprises a camera, which can be activated by the activation signal, for obtaining a video signal of the environment of the presence detection device and an evaluation unit for generating a presence signal relating to the presence of the object by evaluating the video signal.

US2012/327242 discloses a surveillance camera which has a plurality of triggering sensors that sense moving objects. A secondary sensor senses the object first, and wakes up the processor in the camera so that when the object is sensed by a main sensor, the processor is ready to take the picture immediately.

## SUMMARY

The inventors have identified that using a motion sensor to trigger the capture of an image by a camera based on the motion sensor detecting motion can cause a lot of false triggers. This is because a motion sensor such as a PIR detector is unable to identify where in its field of view a moving object is or what the moving object is (e.g. whether it is a human or animal). These false triggers result in the power intensive process of the camera capturing an image of the monitored environment, or performing an action in response to a captured image, when it is not needed. This is particularly undesirable for battery powered systems where available power is limited.

The invention is defined in the independent claims.

An active reflected wave detector is used to improve the detection criteria before performing at least one such action. The detection criteria need to be satisfied in order to perform an action in respect of a captured one or more images, or in embodiments in which an image is yet to be captured, then in order to capture one or more images. This advantageously conserves power that would otherwise be unnecessarily consumed.

In some embodiments, the processor is configured to receive the camera image data from a camera, and the at least one operation comprises processing the camera image data for verification that the predetermined condition is met and/or for checking whether another condition is met.

In some embodiments, the processor is configured to receive the camera image data from a camera, and the at least one operation comprises transmitting the camera image data to a remote device for verification that the predetermined condition is met and/or for checking whether another condition is met.

In some embodiments, the processor is configured to receive the camera image data from a camera, and the at least one operation comprises transmitting a message to a remote device informing the remote device of the capture of said camera image data. The informing of the capturing of the image data may be by implication. For example, in embodiments in which the capturing of an image is triggered by satisfaction of the predetermined condition, it may be that the message indicates that that the predetermined condition has been met, thereby implying that an image has been captured. Additionally or alternatively, the capturing of the image data may be explicitly indicated.

In response to receiving a request from said remote device, the processor may be configured to transmit the camera image data to the remote device.

The camera image data may represent one or a plurality of images of the environment.

In some embodiments, in response to the motion sensor detecting motion in said environment the processor is further configured to control the camera to capture said camera image data.

In some embodiments, the at least one operation comprises controlling the camera to capture said camera image data.

The at least one operation may comprises controlling the camera to switch from a low power consumption operating mode (e.g. a sleep or off mode) to a higher power consumption operating mode.

The processor may be configured to control the camera to switch from a low power consumption operating mode to a higher power consumption operating mode in response to the motion sensor detecting motion.

The at least one operation may comprises transmitting an indication that the predetermined condition is met to a remote device that is operable to control said camera. The remote device may be a control hub or a server.

The camera may sense visible light and/or infrared light.

The processor is configured, in response to a motion sensor detecting motion in said environment, to activate the active reflected wave detector to measure wave reflections from the environment to accrue said measured wave reflection data.

The predetermined condition comprises that an object is detected in said environment.

The predetermined condition may further comprise that the object is determined to be human.

The predetermined condition comprises that an object is located in a predetermined area within a field of view of the active reflected wave detector.

The motion sensor may be a passive infrared sensor. The active reflected wave detector may be a radar sensor.

The apparatus comprises a housing holding the processor. The housing additionally holds the motion sensor, the active reflected wave detector, and the camera.

According to another aspect of the present disclosure there is provided a computer implemented method for detecting an object in an environment according to claim 11.

The method may further comprise performing any of the steps performed by said processor, whether performed on said processor or on a distributed processing system.

According to another aspect of the present disclosure there is provided a system configured to perform the steps of the methods described herein.

The system may include one or more of the motion sensor; the active reflected wave detector; and a camera. The method may be performed on a processing system that is distributed amongst a plurality of separate apparatuses, the separate apparatuses comprising a respective subset of: the motion sensor; the active reflected wave detector; and a camera.

The system may comprise a device which comprises a processor of said processing system to process the measured wave reflection data to determine whether the predetermined condition is met.

The system may comprise the motion sensor, wherein the processor is configured to determine that the motion sensor has detected motion in said environment and in response, activate the active reflected wave detector to measure wave reflections from the environment to accrue the measured wave reflection data.

The system may further comprise a camera, wherein in response to the processor determining that the motion sensor has detected motion in said environment, the processor is further configured to control the camera to capture said camera image data.

The system may further comprise the motion sensor and a remote device, wherein the remote device comprises a second processor of said processing system, and the second processor is configured to determine that the motion sensor has detected motion in said environment and activate the active reflected wave detector to measure wave reflections from the environment to accrue measured wave reflection data.

The system may further comprise a camera, wherein in response to the second processor determining that the motion sensor has detected motion in said environment, the second processor may be further configured to control the camera to capture said camera image data.

The system may further comprise a camera, wherein if the predetermined condition is met, the processor may be configured to control the camera to capture the camera image data.

The system may further comprise a camera, wherein if the predetermined condition is met, the processor may be configured to transmit an indication that the predetermined condition is met to a remote device, wherein the remote device comprises a second processor of said processing system, and the second processor is configured to determine whether to control the camera to capture said camera image data.

The system may further comprise a camera, wherein if the predetermined condition is met, the processor is configured to transmit an indication that the predetermined condition is met to the remote device, and the second processor is configured to determine whether to control the camera to capture said camera image data.

The remote device may be a control hub, a remote server and/or monitoring station.

According to another aspect of the present disclosure there is provided a computer-readable storage medium comprising instructions which, when executed by a processor that is coupled to an active reflected wave detector that is operable to measure wave reflections from the environment, cause the processor to perform the method.

The instructions may be provided on one or more carriers. For example there may be one or more non-transient memories, e.g. a EEPROM (e.g. a flash memory) a disk, CD- or DVD-ROM, programmed memory such as read-only memory (e.g. for Firmware), one or more transient memories (e.g. RAM), and/or a data carrier(s) such as an optical or electrical signal carrier. The memory/memories may be integrated into a corresponding processing chip and/or separate to the chip. Code (and/or data) to implement embodiments of the present disclosure may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language.

These and other aspects will be apparent from the embodiments described in the following. The scope of the present disclosure is not intended to be limited by this summary nor to implementations that necessarily solve any or all of the disadvantages noted, but is limited by the appended claims.

BRIEF DESCRIPTION OF THE SEVERAL VIEWS OF THE DRAWINGS

For a better understanding of the present disclosure and to show how embodiments may be put into effect, reference is made to the accompanying drawings in which:

> Figure 1 illustrates system comprising an environment in which a device has been positioned;
> Figure 2 is a schematic block diagram of the device;
> Figure 3 illustrates a human body with indications of reflections measured by an active reflected wave detector of the device;
> Figure 4 illustrates a process for for detecting an object in an environment according to a first embodiment of the present disclosure; and
> Figure 5 illustrates a process for for detecting an object in an environment according to another embodiment of the present disclosure.

DETAILED DESCRIPTION

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized, and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims and their equivalents.

In the following embodiments, like components are labelled with like reference numerals.

In the following embodiments, the term data store or memory is intended to encompass any computer readable storage medium and/or device (or collection of data storage mediums and/or devices). Examples of data stores include, but are not limited to, optical disks (e.g., CD-ROM, DVD-ROM, etc.), magnetic disks (e.g., hard disks, floppy disks, etc.), memory circuits (e.g., EEPROM, solid state drives, random-access memory (RAM), etc.), and/or the like.

As used herein, except wherein the context requires otherwise, the terms "comprises", "includes", "has" and grammatical variants of these terms, are not intended to be exhaustive. They are intended to allow for the possibility of further additives, components, integers or steps. The functions or algorithms described herein are implemented in hardware, software or a combination of software and hardware in one or more embodiments. The software comprises computer executable instructions stored on computer readable carrier media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, microcontroller or other type of processing device or combination thereof.

Specific embodiments will now be described with reference to the drawings.

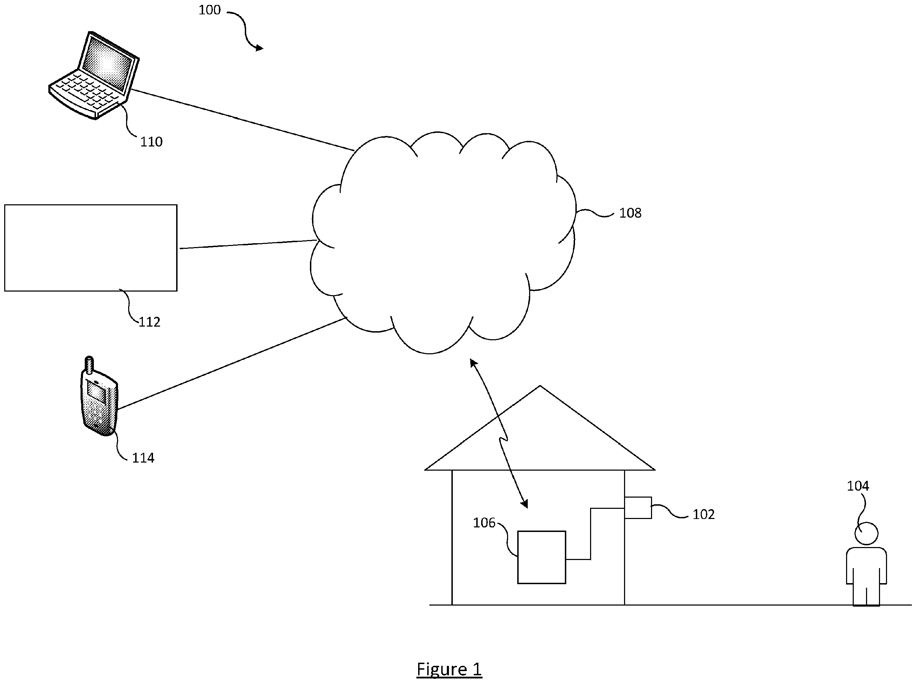

Figure 1 illustrates a system 100 comprising an environment in which a device 102 has been positioned. The environment may for example be an outdoor space such as an area outside of a residential property (e.g. a garden) or commercial property, or a public space (e.g. train station). Alternatively, the environment may be an indoor space such as a room of a home, a public building or other indoor space.

The device 102 is configured to monitor the environment in which a target object (e.g. a person 104) may be present.

As shown in Figure 1, the device 102 may be coupled to a remote device by way of a wired and/or wireless connection. In particular the device 102 may be coupled, preferably wirelessly, to a hub device 106 (otherwise referred to herein as a control hub), which may be in the form of a control panel.

The control hub 106 may transmit data to a remote monitoring station 110 over a network 108. An operator at the remote monitoring station 110 responds as needed to incoming notifications triggered by the device 102 and may also respond to incoming notifications triggered by other similar devices which monitor other environments. In other embodiments, the device 102 may transmit data to the remote monitoring station 110 without interfacing with the control hub 106. In both examples, the data from the device 102 may be sent (from the device 102 or control hub 106) directly to the remote monitoring station 110 or via a remote server 112. The remote monitoring station 110 may be for example a laptop, notebook, desktop, tablet, smartphone or the like.

Additionally or alternatively, the control hub 106 may transmit data to a remote personal computing device 114 over a network 108. A user of the remote personal computing device 114 is associated with the environment monitored by the device 102, for example the user may be the home owner of the environment being monitored, or an employee of the business whose premises are being monitored by the device 102. In other embodiments, the device 102 may transmit data to the remote personal computing device 114 without interfacing with the control hub 106. In both examples the data from the device 102 may be sent (from the device 102 or control hub 106) directly to the remote personal computing device 114 or via the server 112. The remote personal computing device 114 may be for example a laptop, notebook, desktop, tablet, smartphone or the like.

The network 108 may be any suitable network which has the ability to provide a communication channel between the device 102 and/or the control hub 106 to the remote devices 110,112,114.

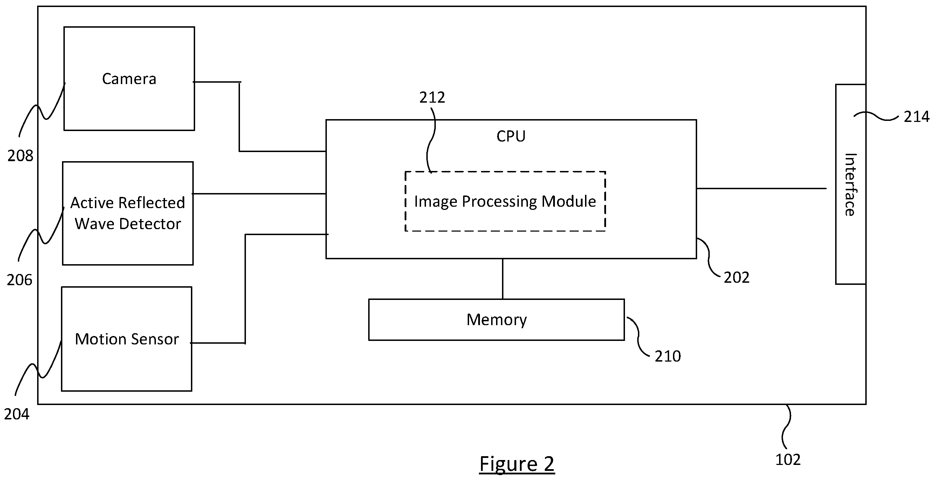

Figure 2 illustrates a simplified view of the device 102. A shown in Figure 2, the device 102 comprises a central processing unit ("CPU") 202, to which is connected a memory 210. The functionality of the CPU 202 described herein may be implemented in code (software) stored on a memory (e.g. memory 210) comprising one or more storage media, and arranged for execution on a processor comprising on or more processing units. The storage media may be integrated into and/or separate from the CPU 202. The code is configured so as when fetched from the memory and executed on the processor to perform operations in line with embodiments discussed herein. Alternatively it is not excluded that some or all of the functionality of the CPU 202 is implemented in dedicated hardware circuitry (e.g. ASIC(s), simple circuits, gates, logic, and/or configurable hardware circuitry like an FPGA. In other embodiments (not shown) a processing system executes the processing steps described herein, wherein the processing system may consist of the processor as described herein or may be comprised of distributed processing devices that may be distributed across two or more devices shown in the system 100. Each processing device of the distributed processing devices may comprise any one of more of the processing devices or units referred to herein.

Figure 2 shows the CPU 202 being connected to a motion sensor 204, an active reflected wave detector 206, and a camera 208. While in the illustrated embodiment the motion sensor 204, active reflected wave detector 206, and the camera 208 are separate from the CPU 202, in other embodiments, at least part of processing aspects of the motion sensor 204 and/or active reflected wave detector 206 and/or camera 208 may be provided by a processor that also provides the CPU 202, and resources of the processor may be shared to provide the functions of the CPU 202 and the processing aspects motion sensor 204 and/or active reflected wave detector 206 and/or camera 208. Similarly, functions of the CPU 202, such as those described herein, may be performed in the motion sensor 204 and/or the active reflected wave detector 206 and/or the camera 208.

In an activated state (e.g. a higher power consumption operating mode) the active reflected wave detector 206 operates to measure wave reflections from the environment. In some embodiments, the active reflected wave detector 206 may consume more power in the activated state (i.e. when turned on and operational) than the motion sensor 204 does when in an activated state.

As shown in Figure 2, a housing 200 of the device 102 may house the motion sensor 204, the active reflected wave detector 206 and the camera 208. Alternatively, the motion sensor 204 may be external to the device 102 and be coupled to the CPU 202 by way of a wired or wireless connection. Similarly, the active reflected wave detector 206 may be external to the device 102 and be coupled to the CPU 202 by way of a wired or wireless connection. Similarly, the camera 208 may be external to the device 102 and be coupled to the CPU 202 by way of a wired or wireless connection. Further, the outputs of the motion sensor 204 and/or active reflected wave detector 206 and/or camera 208 may be wirelessly received from/via an intermediary device that relays, manipulates and/or in part produces their outputs, for example the control hub 106.

In embodiments, the CPU 202 is configured to detect motion in the environment based on an output of the motion sensor 204. The motion sensor 204 may be a passive infrared (PIR) sensor. The motion sensor is preferably a PIR sensor, however it could be an active reflected wave sensor, for example radar, that detects motion based on the Doppler effect. For example, the motion sensor 204 may be a radar based motion sensor which detects motion based on the Doppler component of a radar signal.

The active reflected wave detector 206 may operate in accordance with one of various reflected wave technologies. In operation, the CPU 202 uses the output of the active reflected wave detector 206 to determine the presence of a target object (e.g. human).

Preferably, the active reflected wave detector 206 is a radar sensor. The radar sensor 206 may use millimeter wave (mmWave) sensing technology. The radar is, in some embodiments, a continuous-wave radar, such as frequency modulated continuous wave (FMCW) technology. Such a chip with such technology may be, for example, Texas Instruments Inc. part number IWR6843. The radar may operate in microwave frequencies, e.g. in some embodiments a carrier wave in the range of 1-100GHz (76-81Ghz or 57-64GHz in some embodiments), and/or radio waves in the 300MHz to 300GHz range, and/or millimeter waves in the 30GHz to 300GHz range. In some embodiments, the radar has a bandwidth of at least 1 GHz. The active reflected wave detector 206 may comprise antennas for both emitting waves and for receiving reflections of the emitted waves, and in some embodiment different antennas may be used for the emitting compared with the receiving.

As will be appreciated the active reflected wave detector 206 is an "active" detector in the sense of it relying on delivery of waves from an integrated source in order to receive reflections of the waves. Thus the active reflected wave detector 206 need not be limited to being a radar sensor. In other embodiments, the active reflected wave detector 206 is a lidar sensor, or a sonar sensor.

The active reflected wave detector 206 being a radar sensor is advantageous over other reflected wave technologies in that radar signals may transmit through some materials, e.g. wood or plastic, but not others - notably water which is important because humans are mostly water. This means that the radar can potentially "see" a person in the environment even if they are behind an object of a radar-transmissive material. This is generally not the case for sonar.

Each of the motion sensor 204 and the active reflected wave detector 206 has a field of view. The motion sensor 204 and the active reflected wave detector 206 may be arranged such that their fields of view overlap. The fields of view of the motion sensor 204 and the active reflected wave detector 206 may partially or fully overlap. Thus there may be at least a partial overlap between the fields of view of the motion sensor 204 and the active reflected wave detector 206.

The overlapping, or partial overlapping, of the fields of view is, in some embodiments, in the 3D sense. However in other embodiments the overlapping, or partial overlapping, of the fields of view may be in a 2D, plan view, sense. For example there may be an overlapping field of view in the X and Y axes, but with a non-overlap in the Z axis.

In embodiments, the CPU 202 is configured to control the camera 208 to capture an image (represented by image data) of the environment. The camera 208 is preferably a visible light camera in that it senses visible light. Alternatively, the camera 208 senses infrared light. One example of a camera which senses infrared light is a night vision camera which operates in the near infrared (e.g. wavelengths in the range 0.7 - 1.4$\mu$m) which requires infrared illumination e.g. using infrared LED(s) which is not visible to an intruder. Another example of a camera which senses infrared light is a thermal imaging camera which is passive in that it does not require an illuminator, but rather, senses light in a wavelength range (e.g. a range comprising 7 to 15$\mu$m, or 7 to 11$\mu$m) that

includes wavelengths corresponding to blackbody radiation from a living person (around 9.5 $\mu$m). The camera 208 may be capable of detecting both visible light and, for night vision, near infrared light.

The device 102 may comprise a communications interface 214 for communication of data to and from the device 102. For example, the device 102 may communicate with a remote device 106, 110, 112, 114 via the communications interface 214. Additionally or alternatively, the device 102 may communicate, via the communications interface 214, with one or more of the motion sensor 204, the active reflected wave detector 206, and the camera 208 in embodiments in which such components are not housed in the housing 200 of the device 102.

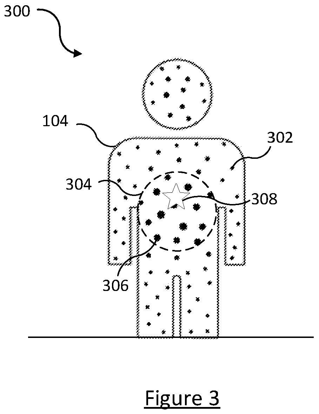

Figure 3 illustrates a free-standing human body 104 with indications of reflective wave reflections therefrom in accordance with some embodiments.

For each reflected wave measurement, for a specific time in a series of time-spaced reflected wave measurements, the reflected wave measurement may include a set of one or more measurement points that make up a "point cloud", the measurement points representing reflections from respective reflection points from the environment. In embodiments, the active reflected wave detector 206 provides an output to the CPU 202 for each captured frame as a point cloud for that frame. Each point 302 in the point cloud may be defined by a 3-dimensional spatial position from which a reflection was received, and defining a peak reflection value, and a Doppler value from that spatial position. Thus, a measurement received from a reflective object may be defined by a single point, or a cluster of points from different positions on the object, depending on its size.

In some embodiments, such as in the examples described herein, the point cloud represents only reflections from moving points of reflection, for example based on reflections from a moving target. That is, the measurement points that make up the point cloud represent reflections from respective moving reflection points in the environment. This may be achieved for example by the active reflected wave detector 206 using moving target indication (MTI). Thus, in these embodiments there must be a moving object in order for there to be reflected wave measurements from the active reflected wave detector (i.e. measured wave reflection data), other than noise Alternatively, the CPU 202 receives a point cloud from the active reflected wave detector 206 for each frame, where the point cloud has not had pre-filtering out of reflections from moving points. Preferably for such embodiments, the CPU 202 filters the received point cloud to remove points having Doppler frequencies below a threshold to thereby obtain a point cloud representing reflections only from moving reflection points. In both of these implementations, the CPU 202 accrues measured wave reflection data which corresponds to point clouds for each frame whereby each point cloud represents reflections only from moving reflection points in the environment.

In other embodiments, no moving target indication (or any filtering) is used. In these implementations, the CPU 202 accrues measured wave reflection data which corresponds to point clouds for each frame whereby each point cloud can represent reflections from both static and moving reflection points in the environment.

Figure 3 illustrates a map of reflections. The size of the point represents the intensity (magnitude) of energy level of the radar reflections (see larger point 306). Different parts or portions of the body reflect the emitted signal (e.g. radar) differently. For example, generally, reflections from areas of the torso 304 are stronger than reflections from the limbs. Each point represents coordinates within a bounding shape for each portion of the body. Each portion can be separately considered and have separate boundaries, e.g. the torso and the head may be designated as different portions. The point cloud can be used as the basis for a calculation of a reference parameter or set of parameters which can be stored instead of or in conjunction with the point cloud data for a reference object (human) for comparison with a parameter or set of parameters derived or calculated from a point cloud for radar detections from an object (human).

When a cluster of measurement points are received from an object in the environment, a location of a particular part/point on the object or a portion of the object, e.g. its centre, may be determined by the CPU 202 from the cluster of measurement point positions having regard to the intensity or magnitude of the reflections (e.g. a centre location comprising an average of the locations of the reflections weighted by their intensity or magnitude). As illustrated in figure 3, the reference body has a point cloud from which its centre has been calculated and represented by the location 308, represented by the star shape. In this embodiment, the torso 304 of the body is separately identified from the body and the centre of that portion of the body is indicated. In alternative embodiments, the body can be treated as a whole or a centre can be determined for each of more than one body part e.g. the torso and the head, for separate comparisons with centres of corresponding portions of a scanned body.

In one or more embodiments, the object's centre or portion's centre is in some embodiments a weighted centre of the measurement points. The locations may be weighted according to an Radar Cross Section (RCS) estimate of each measurement point, where for each measurement point the RCS estimate may be calculated as a constant (which may be determined empirically for the reflected wave detector 206) multiplied by the signal to noise ratio for the measurement divided by $R^4$, where R is the distance from the reflected wave detector 206 antenna configuration to the position corresponding to the measurement point. In other embodiments, the RCS may be calculated as a constant multiplied by the signal for the measurement divided by $R^4$. This may be the case, for example, if the noise is constant or may be treated as though it were constant. Regardless, the received radar reflections in the exemplary embodiments described herein may be considered as an intensity value, such as an absolute value of the amplitude of a received radar signal.

In any case, the weighted centre, WC, of the measurement points for an object may be calculated for each dimension as:

$$ WC = \frac{1}{\sum_{n=1}^{N} W_n} \sum_{n=1}^{N} (W_n P_n) $$

Where:

  $N$ is the number of measurement points for the object;
  $W_n$ is the RCS estimate for the $n^{th}$ measurement point; and
  $P_n$ is the location (e.g. its coordinate) for the $n^{th}$ measurement point in that dimension.

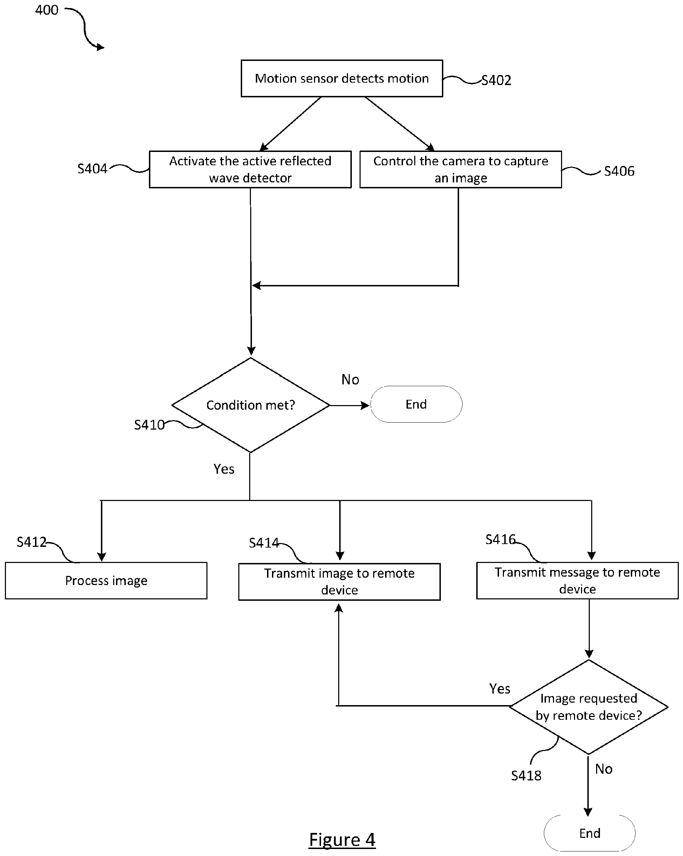

Figure 4 illustrates an example process 400 performed by the CPU 202 for detecting an object in an environment according to a first embodiment of the present disclosure.

Prior to step S402 the active reflected wave detector 206 is in a deactivated state. In the deactivated state the active reflected wave detector 206 may be turned off. Alternatively, in the deactivated state the active reflected wave detector 206 may be turned on but in a low power consumption operating mode whereby the active reflected wave detector 206 is not operable to perform reflected wave measurements. By maintaining the active reflected wave detector 206 in a default state of being deactivated, power is advantageously conserved.

At step S402, in some embodiments the CPU 202 determines that the motion sensor 204 has detected motion in the environment based on receiving an output signal indicative of detected motion from the motion sensor 204.

At step S404, in response to the detected motion the CPU 202 activates the active reflected wave detector 206 so that it is in an activated state (e.g. a higher power consumption operating mode) and operates to measure wave reflections from the monitored space of the environment.

In other embodiments, the control hub 106 may receive the output signal from the motion sensor 204 and determine that the motion sensor 204 has detected motion in the environment based on the output signal being indicative of detected motion. In these embodiments, in response to the detected motion the control hub 106 may transmit a command to activate the active reflected wave detector 206. The control hub 106 transmits the command to a processor that controls the active reflected wave detector 206 (which may be the CPU 202 or another processor).

In these other embodiments, in the scenario whereby the housing 200 houses the active reflected wave detector 206 and the motion sensor 204, the control hub 106 transmits the command to the CPU 202. In the scenario whereby the housing 200 houses the active reflected wave detector 206 but does not house the motion sensor 204, the control hub 106 transmits the command to the CPU 202. In the scenario whereby the housing 200 houses the motion sensor 204 but does not house the active reflected wave detector 206, the control hub 106 may transmit the command to a processor (not shown in the Figures) that controls the active reflected wave detector 206. In the latter two scenarios, rather than the motion sensor 204 and active reflected wave detector 206 being within a common apparatus 102, they may be within respective apparatuses that may operate independently of each other.

In response to the detected motion, in some embodiments at step S406 the CPU 202 additionally controls the camera 208 to capture an image of the environment, and subsequently receives image data associated with a captured image from the camera 208.

In other embodiments, as noted above, the control hub 106 may receive the output signal from the motion sensor 204 and determine that the motion sensor 204 has detected motion in the environment based on the output signal being indicative of detected motion. In these embodiments, in response to the detected motion the control hub 106 may transmit a command to the camera 208 instructing the camera to capture an image of the environment. In these other embodiments, the CPU 202 may receive the image data associated with a captured image from the camera 208. Alternatively the image data may be transmitted from the camera 208 to the control hub 206 which then sends to image data to the CPU 202.

In these other embodiments, the control hub 106 may take into account one or more factors before transmitting the command to activate the active reflected wave detector 206 and the command to the camera 208 instructing the camera to capture an image of the environment. For example, the control hub 106 may be controlled to be in an armed mode or unarmed mode. Thus, in this example the control hub 106 may transmit the command to activate the active reflected wave detector 206 and the command to the camera 208 instructing the camera to capture an image of the environment if the control hub 106 is in an armed mode. However preferably the device 102 knows whether the control hub 106 (or itself) is in an armed mode or unarmed mode and only takes the necessary steps to activate the active reflected wave detector 206 and instruct the camera to capture an image of the environment in the event that the armed mode is active.

In some embodiments, prior to step S406 the camera 208 is in a deactivated state. In the deactivated state the camera 208 may be turned off. Alternatively, in the deactivated state the camera 208 may be turned on but in a low power consumption operating mode (e.g. a sleep mode) whereby the camera 208 is not operable to capture images of the environment. By maintaining the camera 208 in a default state of being deactivated, power is advantageously conserved. In these embodiments, step S406 comprises activating the camera 208 so that it is in an activated state and operable to capture images of the environment. In other words, in the activated state, the camera is powered up and is ready to capture one or more images. It is therefore in a higher power consumption operating mode. Being ready to capture one or more images may comprise having one or more of: a camera aperture setting and a shutter speed/exposure time selected to suit the current ambient conditions (e.g. based on a light intensity measured by a light sensor that is independent of the camera's image sensor). Being ready to capture one or more images may more particularly comprise having at least the camera aperture setting selected.

In the process 400, before the CPU 202 performs an action on the image data of the image, the process 400 proceeds to step S410 where the CPU 202 processes accrued measured wave reflection data to determine whether a predetermined condition is met.

In one example, the predetermined condition comprises that an object is detected in the environment. Various techniques may be used to determine whether an object is detected in the environment. In one possible implementation, the object detection at step S410 may be performed using a tracking module in the CPU 202 and the CPU 202 determines that an object is present in the environment because a cluster of detection measurements (also referred to as measurement points above) can be tracked by the tracking module.

The tracking module can use any known tracking algorithm. For example, the active reflected wave detector 206 may generate a plurality of detection measurements (e.g. up to 100 measurements, or in other embodiments hundreds of measurements) for a given frame. Each measurement can be taken a defined time interval apart such as 0.5, 1, 2 or 5 seconds apart. Each detection measurement may include a plurality of parameters in response to a received reflective wave signal above a given threshold. The parameters for each measurement may for example include an x and y coordinate (and z coordinate for a 3D active reflected wave detector 206), a peak reflection value, and a Doppler value corresponding to the source of the received radar signal.

The data can then be processed using a clustering algorithm to group the measurements into one or more measurement clusters corresponding to a respective one or more targets. An association block of the tracking module may then associate a given cluster with a given previously measured target. A Kalman filter of the tracking module may then be used to estimate the next position of the target based on the corresponding cluster of measurements and a prediction by the Kalman filter of the next position based on the previous position and one or more other parameters associated with the target, e.g. the previous velocity. As an alternative to using a Kalman filter other tracking algorithms known by the person skilled in the art may be used.

The tracking module may output values of location, velocity and/or RCS for each target, and in some embodiments also outputs acceleration and a measure of a quality of the target measurement, the latter of which is essentially to act as a noise filter. The values of position (location) and velocity (and acceleration, if used) may be provided in 2 or 3 dimensions (e.g. cartesian or polar dimensions), depending on the embodiment.

The Kalman filter tracks a target object between frames and whether the Kalman filter's estimation of the objects' parameters converges to the object's actual parameters may depend on the kinematics of the object. For example, more static objects may have a better convergence. The performance of the Kalman filter may be assessed in real time using known methods to determine whether the tracking meets a predefined performance metric, this may be based on a covariance of the Kalman filter's estimation of the object's parameters. For example, satisfactory tracking performance may be defined as requiring at least that the covariance is below a threshold. Depending on the object's motion, the Kalman filter may or may not produce satisfactory performance within a predefined number of frames (e.g. 3-5 frames). The frames may be taken at a rate of 10 to 20 frames per second, for example.

In another example, the predetermined condition comprises that a human is detected in the environment. Any known method for detecting whether the object is human or not can be used. In particular, determining whether the detected object is human may not use a reference object that described above with reference to Figure 3. In one example, this may be performed using the tracking module referred to above.

In some implementations, the RCS of the object may be used at step S410 to determine whether the detected object is human or not. In particular, from the reflected wave measurements an RCS of an object represented by a cluster of measurement points can be estimated by summing the RCS estimates of each of the measurement points in the cluster. This RCS estimate may be used to classify the target as a human target if the RCS is within a particular range potentially relevant to humans for the frequency of the signal emitted by the active reflected wave detector 206, as the RCS of a target is frequency dependent. Taking a 77 GHz radar signal as an example, from empirical measurements, the RCS (which is frequency dependent) of an average human may be taken to be in the order of $0.5m^2$, or more specifically in a range between 0.1 and 0.7 $m^2$, with the value in this range for a specific person depending on the person and their orientation with respect to the radar. The RCS of human in the 57-64GHz spectrum is similar to the 77 GHz RCS - i.e. 0.1 and 0.7 $m^2$. If the RCS is outside that range it may be concluded that the object is inhuman.

Additionally or alternatively, the velocity information associated with the object may be used at step S410 to determine whether the detected object is human or not. For example, it may be concluded that no human is present if there is no detected object having a velocity within a predefined range and/or having certain dynamic qualities that are characteristic of a human.

The above examples are ways of determining that the object is human, which may reflect that the object is likely to be human, or fails a test which would determine that the object is inhuman thereby implying that the object is potentially human. Thus, it will be appreciated by persons skilled in the art that there may be a significant level of error associated with the determination that the object is human.

Optionally, the CPU 202 may process the accrued measured wave reflection data to perform a determination as to whether the person is in a fall position (i.e. a position that is consistent with them haven fallen) or a non-fall position (indicative that they are, at least temporarily, in a safe state). In some embodiments of the present disclosure the determination that the person is in a fall position or has fallen is used as an indicator that the person may be in need of help, e.g. an intruder has fallen whilst attempting to access a premises. In these embodiments the CPU 202 may generate a fall alert and transmit the fall alert to the control hub 106 for subsequent transmission to one or more of the remote monitoring station 110, the server 112 and the remote personal computing device 114. Additionally or alternatively the CPU 202 may transmit the alert message directly to one or more of the remote monitoring station 110, the server 112 and the remote personal computing device 114. It will be therefore be appreciated that the present invention may also have application beyond the field of security. For example, it may be used as a fall detector to monitor a person at risk of falling.

According to the invention, the predetermined condition comprises that an object is located in, or has moved towards, a predetermined area within the field of view of the active reflected wave detector 206. As discussed above, such location information may be provided by the tracking module referred to above, or by other means. The predetermined area within the field of view of the active reflected wave detector 206 may correspond to a region defined by a virtual fence within the field of view of the active reflected wave detector 206. During installation of the device 102, the installer will switch the device to a calibration or configuration mode for the defining of the virtual fence. Exemplary methods for an installer to define such a virtual fence is described in International patent application WO 2020/161 703 A2 filed 4 February 2020. However, other methods of defining a virtual fence may alternatively be employed. It will be appreciated that more than one virtual fence may be defined within the field of view of the active reflected wave detector 206.

If an object is located in the predetermined area within the field of view of the active reflected wave detector 206 this indicates a possible security threat, whereas if the object is outside of the predetermined area this indicates that even though an object is present their presence is not deemed a security threat, or at least not of a sufficient threat to perform an action related to camera image data.

It will be appreciated that at step S410, other predetermined conditions may be checked that are not described herein.

If, at step S410, the CPU 202 determines that the predetermined condition is met, the CPU 202 proceeds to take appropriate action examples of which are described below.

In response to determining at step S410 that the predetermined condition is met, the process 400 may proceed to step S412 where the image data representing the captured image is processed locally on the device 102 to verify that the predetermined condition is met. This image processing may be performed by the image processing module 212 on the CPU 202 (as shown in Figure 2). Alternatively the CPU 202 may supply to the image data to another local processor comprising the image processing module 212 to perform the image processing.

It can be seen that the power intensive image processing is only performed if both the motion sensor 204 has detected motion and the predetermined condition is met based on processing accrued measured wave reflection data from the active reflected wave detector 206.

If the CPU 202 verifies from the local image processing that the predetermined condition is met, the CPU 202 may transmit an alert message to the control hub 106 for subsequent transmission to one or more of the remote monitoring station 110, the server 112 and the remote personal computing device 114. Additionally or alternatively the CPU 202 may transmit the alert message directly to one or more of the remote monitoring station 110, the server 112 and the remote personal computing device 114.

Additionally or alternatively, if the CPU 202 verifies from the local image processing that the predetermined condition is met, the CPU 202 may transmit, via the communications interface 214, the image data representing the captured image to the control hub 106 for subsequent transmission to one or more of the remote monitoring station 110, the server 112 and the remote personal computing device 114. Additionally or alternatively the CPU 202 may transmit, via the communications interface 214, the image data representing the captured image directly to one or more of the remote monitoring station 110, the server 112 and the remote personal computing device 114.

If the CPU 202 determines from the local image processing that the predetermined condition is not met, the image data representing the captured image may be stored in memory 210 or discarded. The CPU 202 then awaits further detected motion in the environment in which case the process 400 is repeated starting at step S402.

In response to determining at step S410 that the predetermined condition is met, the process 400 may proceed to step S414 where the CPU 202 transmits, via the communications interface 214, the image data representing the captured image to the control hub 106 for subsequent transmission to one or more of the remote monitoring station 110, the server 112 and the remote personal computing device 114. Additionally or alternatively the CPU 202 may transmit, via the communications interface 214, the image data representing the captured image directly to one or more of the remote monitoring station 110, the server 112 and the remote personal computing device 114.

The CPU 202 then awaits further detected motion in the environment in which case the process 400 is repeated starting at step S402.

The image processing described above to verify that the predetermined condition is met may be performed locally on the device 102, but in this example it is not performed locally on the device 102 and is instead performed on one of the remote monitoring station 110, the server 112 and the remote personal computing device 114. This advantageously conserves power on the device 102.

Whilst steps S412 and S414 have been described above with reference to the image processing (whether performed locally or remote from the device) being performed to verify that the predetermined condition is met. Additionally or alternatively, this image processing may be performed to check whether another condition is met. For example, if the accrued measured wave reflection data is processed at step S410 to determine that an object is detected in the environment, the image data representing the captured image may be processed to determine whether the object is human (rather than verifying that an object has been detected), or to determine whether the object is not an inhuman animal (e.g. not a pet, such as a dog or a cat). In another example, the image data representing the captured image may be processed using facial recognition techniques wherein the other condition is that the person is a known criminal, black-listed person or not a white-listed person.

In response to determining at step S410 that the predetermined condition is met, the process 400 may proceed to step S416 where the CPU 202 transmits, via the communications interface 214, a message which indicates that the camera 208 has captured an image of the monitored environment. The CPU 202 may transmit the message to the control hub 106 for subsequent transmission to one or more of the remote monitoring station 110, the server 112 and the remote personal computing device 114. Additionally or alternatively the CPU 202 may transmit the alert message directly to one or more of the remote monitoring station 110, the server 112 and the remote personal computing device 114.

In this example, if in reply the CPU 202 receives a request at step S418 from a remote device (e.g. one of the control hub 106, the remote monitoring station 110, the server 112 and the remote personal computing device 114) for the image data representing the captured image, the process proceeds to step S414 where CPU 202 transmits the image data representing the captured image to the remote device.

The transmission at step S416 of the message which indicates that the camera 208 has captured an image of the monitored environment acts as an alert that the camera has been triggered. The uploading of image data to a remote device is a relatively power intensive task, and in this example the CPU 202 only uploads image data to the remote device if commanded to do so from the remote device.

If the remote device does not request the image data representing the captured image, the image data representing the captured image may, in some embodiments, be deleted. The CPU 202 then awaits further detected motion in the environment in which case the process 400 is repeated starting at step S402.

Referring back to step S410, if the CPU 202 determines that the predetermined condition is not met, the image data representing the captured image may, in some embodiments be deleted. Power is conserved because further actions such as those described above in relation to steps S412, S414, and S416 are not performed. The CPU 202 awaits further detected motion in the environment in which case the process 400 is repeated starting at step S402.

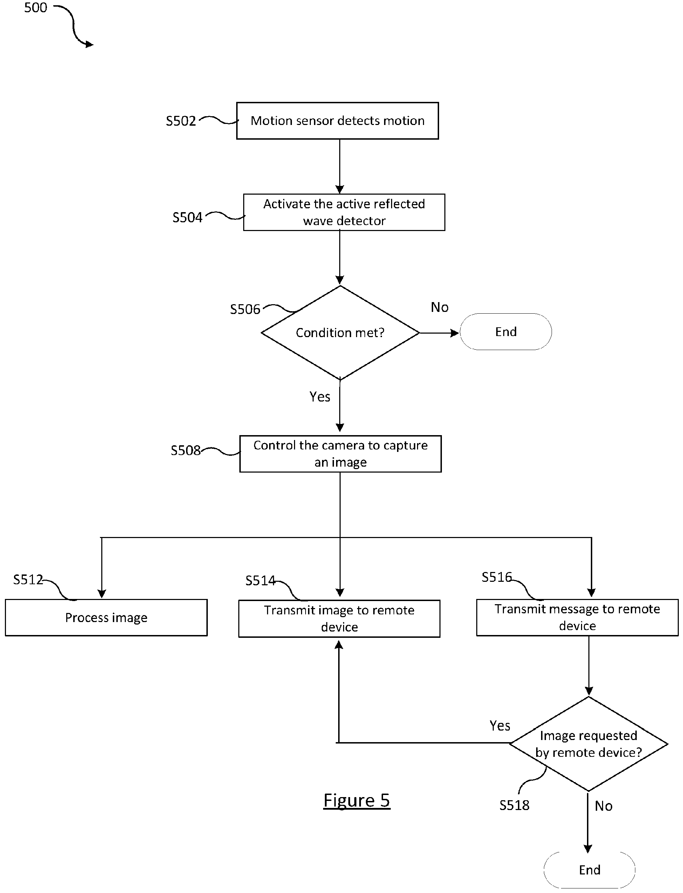

Figure 5 illustrates an example process 500 performed by the CPU 202 for detecting an object in an environment according to another embodiment of the present disclosure.

Prior to step S502 the active reflected wave detector 206 is in a deactivated state. In the deactivated state the active reflected wave detector 206 may be turned off. Alternatively, in the deactivated state the active reflected wave detector 206 may be turned on but in a low power consumption operating mode whereby the active reflected wave detector 206 is not operable to perform reflected wave measurements. By maintaining the active reflected wave detector 206 in a default state of being deactivated, power is advantageously conserved.

At step S502, the CPU 202 determines that the motion sensor 204 has detected motion in the environment based on receiving an output signal indicative of detected motion from the motion sensor 204. Step S502 corresponds to step S402 described above with reference to process 400.

At step S504, in response to the detected motion the CPU 202 activates the active reflected wave detector 206 so that it is in an activated state (e.g. a higher power consumption operating mode) and operates to measure wave reflections from the monitored space of the environment. Step S504 corresponds to step S404 described above with reference to process 400.

The variants of how step S402 and S404 may be implemented which involve the control hub 106 that are described above also apply to steps S502 and S504. The control hub 106 is in some embodiments located at the premises, but in other embodiments the control hub 106 described herein may be located remote from the premises or its functions may be integrated into a server (which may be a distributed server). Such a server may also serve other premises.

In the process 500, before the CPU 202 controls the camera 208 to capture an image, the process 500 proceeds to step S506 where the CPU 202 processes accrued measured wave reflection data to determine whether a predetermined condition is met.

Step S506 may correspond to step S410. Examples of how step S410 (and thus step S506) may be implemented have been described above and are therefore not repeated. However, in other embodiments, the predetermined condition may be that it is determined that the person is in a fall position or has fallen.

If, at step S506, the CPU 202 determines that the predetermined condition is met, the CPU 202 determines that an intruder is present in the monitored environment and the process 500 proceeds to step S508 where the CPU 202 controls the camera 208 to capture an image of the environment. Step S508 may correspond to (e.g. involve the same actions as) step S406 of figure 4.

Whilst step S508 has been described above with reference to the CPU 202 controlling the camera 208 to capture an image of the environment, in other embodiments the CPU 202 transmits an indication that the predetermined condition is met to the control hub 106.

In these other embodiments, in response to receiving this indication the control hub 106 determines whether an image is to be captured by the camera 208. If the control hub 106 determines that an image is to be captured by the camera 208, the control hub 106 transmits a command to capture an image of the environment to a processor that controls the camera 208 (the processor that controls the camera 208 may be the CPU 202 or another processor). The CPU 202 may then receive the image data associated with a captured image from the camera 208. Alternatively the image data may be transmitted from the camera 208 to the control hub 206 which then sends the image data to the CPU 202.

In these other embodiments, in the scenario whereby the housing 200 houses the active reflected wave detector 206 and the camera 208, the control hub 106 transmits the command to the CPU 202. In the scenario whereby the housing 200 houses the camera 208 but does not house the active reflected wave detector 206, the control hub 106 transmits the command to the CPU 202. In the scenario whereby the housing 200 houses the active reflected wave detector 206 but does not house the camera 208, the control hub 106 may transmit the command to a processor (not shown in the Figures) that controls the camera 208.. In the latter two scenarios, rather than the camera 208 and active reflected wave detector 206 being within a common apparatus 102, they may be within respective apparatuses that may operate independently of each other.

In some embodiments, prior to step S502 the camera 208 is in a deactivated state. In the deactivated state the camera 208 may be turned off. Alternatively, in the deactivated state the camera 208 may be turned on but in a low power consumption operating mode whereby the camera 208 is not operable to capture images of the environment. By maintaining the camera 208 in a default state of being deactivated, power is advantageously conserved.

In some embodiments, in response to detecting motion at step S502, the CPU 202 may activate the camera 208 so that it is in an activated state and operable to capture images of the environment, despite the capturing of the images only occurring later, conditional on the predetermined condition being met.

In other embodiments, the camera 208 is in the deactivated state until step 508. In these embodiments, step S508 comprises activating the camera 208 so that it is in an activated state and operable to capture images of the environment.

Following step S508, the CPU 202 receives image data associated with a captured image from the camera 208.

The CPU 202 then performs an action on the image data associated with the captured image.

The process 500 may proceed to step S512. Step S512 corresponds to step S412 described above with reference to process 400.

The process 500 may proceed to step S514. Step S514 corresponds to step S414 described above with reference to process 400.

The process 500 may proceed to step S516. Step S516 corresponds to step S416 described above with reference to process 400.

Referring back to step S506, if the CPU 202 determines that the predetermined condition is not met, the CPU 202 does not control the camera 208 to capture an image. Instead, the CPU 202 awaits further detected motion in the environment in which case the process 500 is repeated starting at step S502. This advantageously conserves power.

For each of the examples described herein, it is preferable that whenever awaiting a further detected motion the camera 208 is again in the lower power mode. The returning of the camera 208 to the low power mode may occur as soon as the image data is captured at step S406 or 508.

In some implementations of the process 500, if the CPU 202 receives a request at step S518 from a remote device for the image data representing the captured image, the process proceeds to step S514 where CPU 202 transmits the image data representing the captured image to the remote device. For example, step S518 may correspond to step S418 described above with reference to process 400.

The term "module," as used herein generally represent software, firmware, hardware, or a combination thereof. In the case of a software implementation, the module represents program code that performs specified tasks when executed on a processor (e.g. CPU or CPUs). The program code can be stored in one or more computer readable memory devices.

## Claims

1. An apparatus (102) for detecting an object in an environment, the apparatus comprising:

   a processor (202), the processor coupled to an active reflected wave detector (206) that is operable to measure wave reflections from the environment, wherein the processor is configured to:

   process measured wave reflection data to determine whether a predetermined condition is met, wherein the predetermined condition comprises that an object is located in, or has moved towards, a predetermined area within a field of view of the active reflected wave detector; the measured wave reflection data accrued by the processor in response to the active reflected wave detector being activated in response to a motion sensor (204) detecting motion in said environment; and
   if the predetermined condition is met, perform at least one operation related to camera image data representing a captured image of the environment, the camera image data being:

   captured by a camera (208) in response to the motion sensor detecting motion in said environment; or
   captured by the camera in response to the predetermined condition being met; and

   a housing holding the processor, the motion sensor, the active reflected wave detector, and the camera.

2. The apparatus according to claim 1, wherein the processor is configured to receive the camera image data from the camera, and the at least one operation comprises:
   processing (S412. S512) the camera image data for verification that the predetermined condition is met and/or for checking whether another condition is met.

3. The apparatus according to claim 1, wherein the processor is configured to receive the camera image data from a camera, and the at least one operation comprises transmitting (S414. S514) the camera image data to a remote device for verification that the predetermined condition is met and/or for checking whether another condition is met.

4. The apparatus according to claim 1, wherein the processor is configured to receive the camera image data from a camera, and the at least one operation comprises transmitting (S416. S516) a message to a remote device informing the remote device of the capture of said camera image data.

5. The apparatus according to any preceding claim, wherein the processor is configured to control the camera to switch from a low power consumption operating mode to a higher power consumption operating mode in response to the motion sensor detecting motion.

6. The apparatus according to any preceding claim, wherein the predetermined condition further comprises that the object is determined to be human.

7. The apparatus according to any preceding claim, wherein the predetermined condition comprises that the object is located in the predetermined area, the predetermined area corresponding to a region defined by a virtual fence within the field of view of the active reflected wave detector.

8. The apparatus according to any preceding claim, wherein the active reflected wave detector consumes more power in an activated state than the motion sensor does when in an activated state.

9. The apparatus according to any preceding claim, wherein the motion sensor is a passive infrared sensor.

10. The apparatus according to any preceding claim, wherein the active reflected wave detector is a radar sensor.

11. A computer implemented method for detecting an object in an environment, the method comprising:

in response to a motion sensor detecting motion in said environment, activating an active reflected wave detector to measure wave reflections from the environment to accrue measured wave reflection data;

processing the measured wave reflection data to determine whether a predetermined condition is met, wherein the predetermined condition comprises that an object is located in, or has moved towards, a predetermined area within a field of view of the active reflected wave detector; and
if the predetermined condition is met, performing at least one operation related to camera image data representing a captured image of the environment, the camera image data being:

captured by a camera in response to the motion sensor detecting motion in said environment; or
captured by the camera in response to the predetermined condition being met;
wherein a housing holds the processor, the motion sensor, the active reflected wave detector, and the camera.

12. The computer implemented method of claim 11, the method further comprising controlling the camera to switch from a low power consumption operating mode to a higher power consumption operating mode in response to the motion sensor detecting motion.

13. The computer implemented method of any of claims 11 to 12, wherein the active reflected wave detector consumes more power in an activated state than the motion sensor does when in an activated state.

14. A non-transitory computer-readable storage medium comprising instructions which, when executed by a processor (202) that is coupled to an active reflected wave detector (206) that is operable to measure wave reflections from the environment, cause the processor to perform the method of any of claims 11-13.

15. A system for detecting an object in an environment, the system comprising:
a processing system, wherein in response to a motion sensor (204) detecting motion in said environment, the processing system is configured to perform the method of any of claims 11-13.

**Patentansprüche**

1. Vorrichtung (102) zum Erkennen eines Objekts in einer Umgebung, wobei die Vorrichtung Folgendes umfasst:
einen Prozessor (202), wobei der Prozessor an einen aktiven Detektor (206) reflektierter Wellen gekoppelt ist, der funktionsfähig ist, um Wellenreflexionen aus der Umgebung zu messen, wobei der Prozessor zu Folgendem konfiguriert ist:

Verarbeiten gemessener Wellenreflexionsdaten , um festzustellen, ob eine vorbestimmte Bedingung erfüllt ist, wobei die vorbestimmte Bedingung umfasst, dass sich ein Objekt in einem vorbestimmten Bereich innerhalb eines Sichtfeldes des aktiven Detektors reflektierter Wellen befindet oder sich hin zu demselben bewegt hat; wobei die gemessenen Wellenreflexionsdaten als Reaktion darauf durch den Prozessor gesammelt werden, dass der aktive Detektor reflektierter Wellen als Reaktion darauf aktiviert wird, dass ein Bewegungssensor (204) eine Bewegung in der Umgebung erkennt, und, falls die vorbestimmte Bedingung erfüllt ist, Durchführen mindestens einer Operation bezüglich Kamerabilddaten, die ein erfasstes Bild der Umgebung darstellen, wobei die Kamerabilddaten:

durch eine Kamera (208) als Reaktion darauf erfasst werden, dass der Bewegungssensor eine Bewegung in der Umgebung erkennt, oder
durch die Kamera als Reaktion darauf erfasst werden, dass die vorbestimmte Bedingung erfüllt ist, und
ein Gehäuse, das den Prozessor, den Bewegungssensor, den aktiven Detektor reflektierter Wellen und die Kamera aufnimmt.

2. Vorrichtung nach Anspruch 1, wobei der Prozessor dafür konfiguriert ist, die Kamerabilddaten von der Kamera zu empfangen, und die mindestens eine Operation Folgendes umfasst:
Verarbeiten (S412, S512) der Kamerabilddaten zum Nachweis, dass die vorbestimmte Bedingung erfüllt ist, und/oder zum Überprüfen, ob eine andere Bedingung erfüllt ist.

3. Vorrichtung nach Anspruch 1, wobei der Prozessor dafür konfiguriert ist, die Kamerabilddaten von einer Kamera zu empfangen, und die mindestens eine Operation das Senden (S414, S514) der Kamerabilddaten an eine entfernte Einrichtung zum Nachweis, dass die vorbestimmte Bedingung erfüllt ist, und/oder zum Überprüfen, ob eine andere Bedingung erfüllt ist, umfasst.

4. Vorrichtung nach Anspruch 1, wobei der Prozessor dafür konfiguriert ist, die Kamerabilddaten von einer Kamera zu empfangen, und die mindestens eine Operation das Senden (S416, S516) einer Nachricht an eine entfernte Einrichtung umfasst, die die entfernte Einrichtung über das Erfassen der Kamerabilddaten informiert.

5. Vorrichtung nach einem der vorhergehenden Ansprüche, wobei der Prozessor dafür konfiguriert ist, die Kamera zu steuern, um als Reaktion darauf, dass der Bewegungssensor eine Bewegung erkennt, von einem Betriebsmodus mit niedrigem Energieverbrauch zu einem Betriebsmodus mit höherem Energieverbrauch zu schalten.

6. Vorrichtung nach einem der vorhergehenden Ansprüche, wobei die vorbestimmte Bedingung ferner umfasst, dass das Objekt als menschlich bestimmt wird.

7. Vorrichtung nach einem der vorhergehenden Ansprüche, wobei die vorbestimmte Bedingung umfasst, dass sich das Objekt in dem vorbestimmten Bereich befindet, wobei der vorbestimmte Bereich einem Gebiet entspricht, das durch einen virtuellen Zaun innerhalb des Sichtfeldes des aktiven Detektors reflektierter Wellen definiert wird.

8. Vorrichtung nach einem der vorhergehenden Ansprüche, wobei der aktive Detektor reflektierter Wellen in einem aktivierten Zustand mehr Energie verbraucht als es der Bewegungssensor tut, wenn er sich in einem aktivierten Zustand befindet.

9. Vorrichtung nach einem der vorhergehenden Ansprüche, wobei der Bewegungssensor ein passiver Infrarotsensor ist.

10. Vorrichtung nach einem der vorhergehenden Ansprüche, wobei der aktive Detektor reflektierter Wellen ein Radarsensor ist.

11. Rechnerimplementiertes Verfahren zum Erkennen eines Objekts in einer Umgebung, wobei das Verfahren Folgendes umfasst:

als Reaktion darauf, dass ein Bewegungssensor eine Bewegung in der Umgebung erkennt, Aktivieren eines aktiven Detektors reflektierter Wellen, um Wellenreflexionen aus der Umgebung zu messen, um gemessene Wellenreflexionsdaten zu sammeln,
Verarbeiten der gemessenen Wellenreflexionsdaten, um festzustellen, ob eine vorbestimmte Bedingung erfüllt ist, wobei die vorbestimmte Bedingung umfasst, dass sich ein Objekt in einem vorbestimmten Bereich innerhalb eines Sichtfeldes des aktiven Detektors reflektierter Wellen befindet oder sich hin zu demselben bewegt hat, und,
falls die vorbestimmte Bedingung erfüllt ist, Durchführen mindestens einer Operation bezüglich Kamerabilddaten, die ein erfasstes Bild der Umgebung darstellen, wobei die Kamerabilddaten:

durch eine Kamera als Reaktion darauf erfasst werden, dass der Bewegungssensor eine Bewegung in der Umgebung erkennt; oder

durch die Kamera als Reaktion darauf erfasst werden, dass die vorbestimmte Bedingung erfüllt ist;

wobei ein Gehäuse den Prozessor, den Bewegungssensor, den aktiven Detektor reflektierter Wellen und die Kamera aufnimmt.

**12.** Rechnerimplementiertes Verfahren nach Anspruch 11, wobei das Verfahren ferner das Steuern der Kamera umfasst, um als Reaktion darauf, dass der Bewegungssensor eine Bewegung erkennt, von einem Betriebsmodus mit niedrigem Energieverbrauch zu einem Betriebsmodus mit höherem Energieverbrauch zu schalten.

**13.** Rechnerimplementiertes Verfahren nach einem der Ansprüche 11 bis 12, wobei der aktive Detektor reflektierter Wellen in einem aktivierten Zustand mehr Energie verbraucht als es der Bewegungssensor tut, wenn er sich in einem aktivierten Zustand befindet.

**14.** Nichtflüchtiges rechnerlesbares Speichermedium, das Anweisungen umfasst, die, wenn sie durch einen Prozessor (202) ausgeführt werden, der an einen aktiven Detektor (206) reflektierter Wellen gekoppelt ist, der funktionsfähig ist, um Wellenreflexionen aus der Umgebung zu messen, veranlassen, dass der Prozessor das Verfahren nach einem der Ansprüche 11 bis 13 durchführt.

**15.** System zum Erkennen eines Objekts in einer Umgebung, wobei das System Folgendes umfasst: ein Verarbeitungssystem, wobei als Reaktion darauf, dass ein Bewegungssensor (204) eine Bewegung in der Umgebung erkennt, das Verarbeitungssystem dafür konfiguriert ist, das Verfahren nach einem der Ansprüche 11 bis 13 durchzuführen.

**Revendications**

**1.** Appareil (102) pour détecter un objet dans un environnement, l'appareil comprenant :
un processeur (202), le processeur étant couplé à un détecteur actif d'ondes réfléchies (206) qui est fonctionnel pour mesurer des réflexions d'ondes de l'environnement, dans lequel le processeur est configuré pour :

traiter des données de réflexion d'ondes mesurées pour déterminer si une condition prédéterminée est ou n'est pas satisfaite, dans lequel la condition prédéterminée comprend le fait qu'un objet est situé dans, ou s'est déplacé vers une zone prédéterminée à l'intérieur d'un champ de vision du détecteur actif d'ondes réfléchies ; les données de réflexion d'ondes mesurées étant accumulées par le processeur en réponse à l'activation du détecteur actif d'ondes réfléchies en réponse à la détection par un capteur de mouvement (204) d'un mouvement dans ledit environnement, et

si la condition prédéterminée est satisfaite, réaliser au moins une opération associée à des données d'image de caméra représentant une image capturée de l'environnement, les données d'image de caméra étant :

capturées par une caméra (208) en réponse à la détection par le capteur de mouvement d'un mouvement dans ledit environnement, ou

capturées par la caméra en réponse au fait que la condition prédéterminée est satisfaite, et

un boîtier contenant le processeur, le capteur de mouvement, le détecteur actif d'ondes réfléchies et la caméra.

**2.** Appareil selon la revendication 1, dans lequel le processeur est configuré pour recevoir les données d'image de caméra de la caméra, et l'au moins une opération comprend :
le traitement (S412, S512) des données d'image de caméra pour vérifier que la condition prédéterminée est satisfaite et/ou pour examiner si une autre condition est ou n'est pas satisfaite.

**3.** Appareil selon la revendication 1, dans lequel le processeur est configuré pour recevoir les données d'image de caméra d'une caméra, et l'au moins une opération comprend la transmission (S414, S514) des données d'image de caméra à un dispositif distant pour une vérification que la condition prédéterminée est satisfaite et/ou pour examiner si une autre condition est ou n'est pas satisfaite.

**4.** Appareil selon la revendication 1, dans lequel le processeur est configuré pour recevoir les données d'image de caméra d'une caméra, et l'au moins une opération comprend la transmission (S416, S516) d'un message à un dispositif distant informant le dispositif distant de la capture desdites données d'image de caméra.

**5.** Appareil selon l'une quelconque des revendications précédentes, dans lequel le processeur est configuré pour commander la caméra pour basculer d'un mode de fonctionnement à basse consommation d'énergie à un mode de fonctionnement à haute consommation d'énergie en réponse à la détection d'un mouvement par le capteur de mouvement.

6. Appareil selon l'une quelconque des revendications précédentes, dans lequel la condition prédéterminée comprend en outre le fait que l'objet est déterminé comme étant un être humain.

7. Appareil selon l'une quelconque des revendications précédentes, dans lequel la condition prédéterminée comprend le fait que l'objet est situé dans la zone prédéterminée, la zone prédéterminée correspondant à une région définie par une barrière virtuelle à l'intérieur du champ de vision du détecteur actif d'ondes réfléchies.

8. Appareil selon l'une quelconque des revendications précédentes, dans lequel le détecteur actif d'ondes réfléchies consomme plus d'énergie dans un état activé que le capteur de mouvement lorsqu'il est dans un état activé.

9. Appareil selon l'une quelconque des revendications précédentes, dans lequel le capteur de mouvement est un capteur passif infrarouge.

10. Appareil selon l'une quelconque des revendications précédentes, dans lequel le détecteur actif d'ondes réfléchies est un capteur radar.

11. Procédé mis en œuvre par ordinateur pour détecter un objet dans un environnement, le procédé comprenant :

en réponse à la détection d'un mouvement dans ledit environnement par un capteur de mouvement, l'activation d'un détecteur actif d'ondes réfléchies pour mesurer des réflexions d'ondes de l'environnement pour accumuler des données de réflexions d'ondes mesurées, le traitement des données de réflexion d'ondes mesurées pour déterminer si une condition prédéterminée est ou n'est pas satisfaite, dans lequel la condition prédéterminée comprend le fait qu'un objet est situé dans, ou s'est déplacé vers une zone prédéterminée à l'intérieur d'un champ de vision du détecteur actif d'ondes réfléchies, et si la condition prédéterminée est satisfaite, la réalisation d'au moins une opération associée à des données d'image de caméra représentant une image capturée de l'environnement, les données d'image de caméra étant :

capturées par une caméra en réponse à la détection par le capteur de mouvement d'un mouvement dans ledit environnement, ou capturées par la caméra en réponse au fait que la condition prédéterminée est satisfaite,

dans lequel un boîtier contient le processeur, le capteur de mouvement, le détecteur actif d'ondes réfléchies et la caméra.

12. Procédé mis en œuvre par ordinateur selon la revendication 11, le procédé comprenant en outre :
la commande de la caméra pour basculer d'un mode de fonctionnement à basse consommation d'énergie à un mode de fonctionnement à haute consommation d'énergie en réponse à la détection d'un mouvement par le capteur de mouvement.

13. Procédé mis en œuvre par ordinateur selon l'une quelconque des revendications 11 à 12, dans lequel le détecteur actif d'ondes réfléchies consomme plus d'énergie dans un état activé que le capteur de mouvement lorsqu'il est dans un état activé.

14. Support de stockage non transitoire lisible par ordinateur comprenant des instructions qui, lorsqu'elles sont exécutées par un processeur (202) qui est couplé à un détecteur actif d'ondes réfléchies (206) fonctionnel pour mesurer des réflexions d'ondes de l'environnement, amènent le processeur à réaliser le procédé selon l'une quelconque des revendications 11 à 13.

15. Système pour détecter un objet dans un environnement, le système comprenant :
un système de traitement, dans lequel en réponse à la détection d'un mouvement dans ledit environnement par un capteur de mouvement (204), le système de traitement est configuré pour réaliser le procédé selon l'une quelconque des revendications 11 à 13.

EP 4 150 598 B1

Figure 1

Figure 2

Figure 3

400

Motion sensor detects motion — S402

S404 — Activate the active reflected wave detector

Control the camera to capture an image — S406

Condition met? — No — End

S410

Yes

S412 — Process image

S414 — Transmit image to remote device

S416 — Transmit message to remote device

Yes — Image requested by remote device?

S418 — No — End

<u>Figure 4</u>

500

S502 — Motion sensor detects motion

S504 — Activate the active reflected wave detector

S506 — Condition met? → No → End

Yes

S508 — Control the camera to capture an image

S512 — Process image

S514 — Transmit image to remote device

S516 — Transmit message to remote device

Image requested by remote device? — S518

Yes

No → End

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2353293 A
- EP 3203454 A
- US 20140300735 A1
- US 10657784 B
- US 2019188492 A
- US 2012327242 A
- WO 2020161703 A2